# EUROPEAN PATENT APPLICATION

(11) **EP 1 279 915 A1**
(43) Date of publication of application: **29.01.2003**
(21) Application number: 01117964.5
(22) Date of filing: 24.07.2001
(51) Int. Cl.: F28D 9/00, B01J 8/02

(54) **Heat exchange unit, in particular for isothermal reactors**

(71) Applicant: METHANOL CASALE S.A., 6900 Lugano-Besso (CH)
(72) Inventor: Filippi, Ermanno, 6976 Castagnola (CH); Rizzi, Enrico, 22070 Grandate (CO) (IT); Tarozzo, Mirco, 6853 Ligometto (CH)
(74) Representative: Zardi, Marco

(57) **Abstract**

A heat exchange unit for isothermal reactors, comprising a plurality of substantially box-shaped plate exchangers (14), inside which is defined a chamber (18) intended to have an operating heat exchange fluid flowing through it and equipped with tubular fittings for the inlet and outlet (20a, 21a) of the fluid in and from the chamber (18), is distinguished by the fact that at least one of the exchangers (14) is internally equipped with a partition baffle (19), extending from one side (14b) of the exchanger (14) towards a side (14c) opposite to it and from which said partition baffle (19) is kept at a predetermined distance, the partition baffle (19) defining in the chamber a substantially U-shaped fluid path with ascending and descending parts (18a, 18b), respectively, in communication with the outside of the exchanger through the tubular fittings (20a, 21a).

## Description

### Field of application

The present invention, in its most general aspect, refers to a reactor for carrying out exothermal or endothermic chemical reactions, of the type comprising a substantially cylindrical shell which is closed at the opposite ends by respective bottoms, a reaction zone in said shell wherein a catalytic bed is positioned, and a heat exchange unit immersed in said catalytic bed.

In the following of the description and in the subsequent claims, by the term: "isothermal reactor", it is intended to mean, generally, a reactor of the type mentioned above wherein the reaction temperature is held close to a predetermined value or to a pattern of values, through an appropriate and continuous heat exchange carried out in the catalytic bed.

More in particular, the present invention refers to a heat exchange unit for isothermal reactors of the type considered here, comprising substantially box-shaped heat exchange elements or plate heat-exchangers, inside which is defined a chamber in communication with the outside through at least two tubular fittings, for the inlet and outlet of an operating heat exchange fluid, respectively.

### Prior art

Generally, with the purpose of promoting the kinetics of a predetermined chemical reaction, both exothermal and endothermic, carried out in an isothermal reactor, the operating fluid used in the exchange unit of said reactor consists of a suitable and controlled flow of the reactant gases fed to the reactor itself. These gases, indeed, flowing across the respective heat exchange unit, in cocurrent or counter-current with the reaction products, take in or give off heat to the reaction environment (catalytic bed), shifting the reaction itself towards its completion. Moreover, at the outlet of said heat exchange unit, the reactant gases are fed directly to the catalytic bed at a thermodynamically favourable temperature for the start of the reaction; from this point of view, they can be considered thermally conditioned.

For the aforementioned reasons, although not only for these, the prevalent and constant teaching of the prior art for heat exchange units that use plate heat exchangers is that of equipping said exchangers with respective fittings for the inlet and outlet of the operating fluid, which are positioned on opposite sides thereof.

Although advantageous for many aspects, heat exchangers thus equipped have a recognized technical drawback, basically due to the fact that the operating fluid intended to be used in them can only consist of the flow of reactant gases fed to the reactor. A drawback which is clearly seen when the exchanger is "rectangular" and is arranged with the long sides parallel to the axis of the reactor and when the reaction is of the exothermal type.

Indeed, heat exchangers, immersed in the catalytic bed, are subject to a thermal expansion, which, generally, is different to that of the reactor shell. The consequent different axial lengthening leads to a substantial "shifting" of the exchanger with respect to the shell, a shifting which can be detected above all at its upper and lower sides. It is precisely at these sides of the exchanger that open out the ducts for the inlet and outlet of the operating fluid, respectively.

In particular, using an operating fluid other than the reactant gases, e.g. (boiling) water, a diathermal liquid, or else melted salts and the like, both the inlet and the outlet ducts must have the opposite ends fastened to the shell and the exchanger, respectively. Ends that are thus subjected to different "shifts" due to the different thermal expansions, which are difficult to compensate for and, as such, are particularly harmful to the entire structure of the heat exchange unit.

### Summary of the invention

The problem underlying the present invention is that of providing a heat exchange unit for isothermal reactors having structural and functional features such that the drawback mentioned above with reference to the prior art is completely overcome and at the same time allowing the use of operating fluids consisting of reactant gases fed to the reactor or of fluids different to such gases, such as boiling water, melted salts, etc.

This problem is solved according to the invention by a heat exchange unit for isothermal reactors, comprising a plurality of substantially box-shaped plate exchangers, inside which is defined a chamber intended to have an operating heat exchange fluid flowing through it and equipped with tubular fittings for the inlet and outlet of said fluid in and from said chamber, characterized in that at least one of said exchangers is internally equipped with a partition baffle, extending from one side of said exchanger towards a side opposite to it and from which said partition baffle is kept at a predetermined distance, said partition baffle defining in said chamber a substantially U-shaped fluid path with ascending and descending parts, respectively, in communication with the outside of the exchanger through said tubular fittings.

The advantages and the features of a heat exchange unit according to the invention will become clearer from the following description of an indicative and non-limiting embodiment thereof, given hereafter with reference to the attached drawings.

### Brief description of the drawings

Fig. 1 shows schematically, in perspective and in partial section an isothermal reactor using a heat exchange unit according to the invention;
Fig. 2 shows an enlarged detail of the heat exchange unit of fig. 1;
Fig. 3 shows a section made along line III-III of fig. 2; and
Fig. 4 shows an alternative embodiment of the detail of fig. 2.

### Detailed description

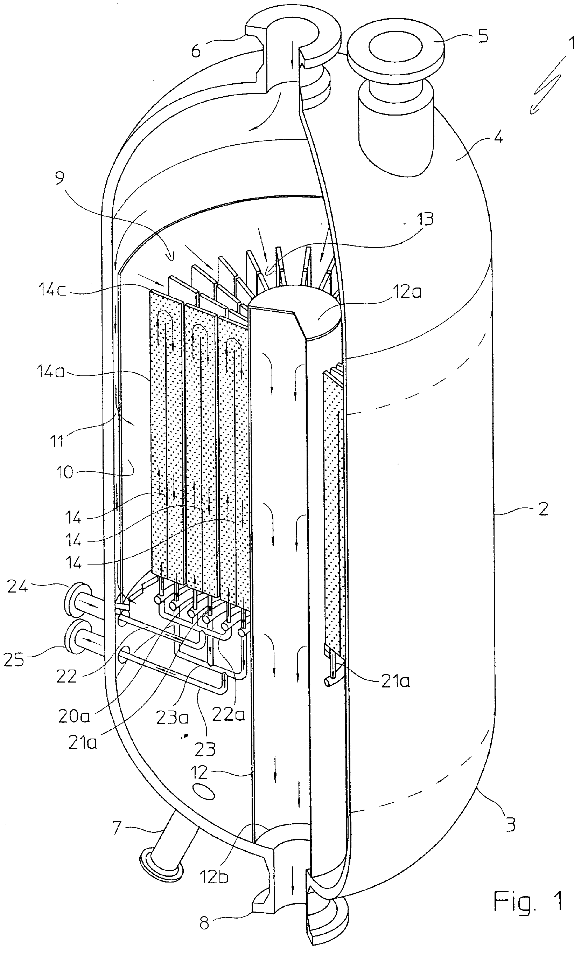

With reference to figure 1, with 1 is indicated - as a whole - an isothermal reactor comprising a cylindrical shell 2, with a vertical axis, closed at the opposite ends by an upper 4 and a lower 3 bottom, respectively. The bottoms 4, 3, are conventionally equipped with passages 6 and 8 for the introduction of reactants and the discharge of reaction products, in and from said isothermal reactor 1, respectively, as well as with a manhole 5 and a passage 7 for the catalyst discharge.

In the shell 2 is, defined a reaction zone or environment 9, conventionally comprised between a metallic "cartridge" 10 and a central duct 12, extending at the axis of the shell itself. The cartridge 10 is cylindrical and coaxial to said shell 2, defining together with it a space 11 of reduced width. The cylindrical cartridge 10 is perforated to allow the passage of reactant gases from said space 11 to said reaction zone, whereas the central duct 12, also permeable to gas, has a closed upper end 12a and an open lower end 12b, which is in direct fluid communication with the passage 8 of the bottom 3.

The reaction zone 9 is intended to contain a mass of an appropriate catalyst (not shown), in which a heat exchange unit indicated - as a whole - with 13 is immersed and supported.

Said heat exchange unit 13 has a generally cylindrical shape, with an outer diameter substantially equal to the inner diameter of the cartridge 10 and an inner diameter substantially equal to the outer diameter of the axial duct 12.

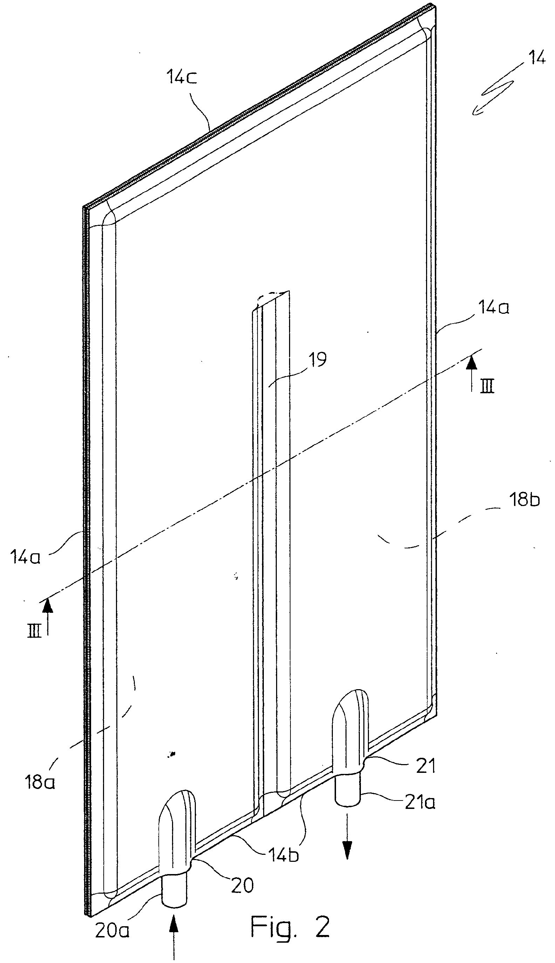

In particular, according to a preferred but not limiting embodiment shown in fig. 1, said heat exchange unit 13 comprises a plurality of heat exchangers 14, regularly distributed in three coaxial and concentric rows. Each exchanger 14 (fig. 2) has a substantially flat box-shaped structure, with an essentially elongated rectangular form. According to the arrangement of fig. 1, in the exchange unit 13 all of the exchangers 14 are arranged with their long sides 14a parallel to the axis of the shell 2 and their short sides extended radially with respect to it.

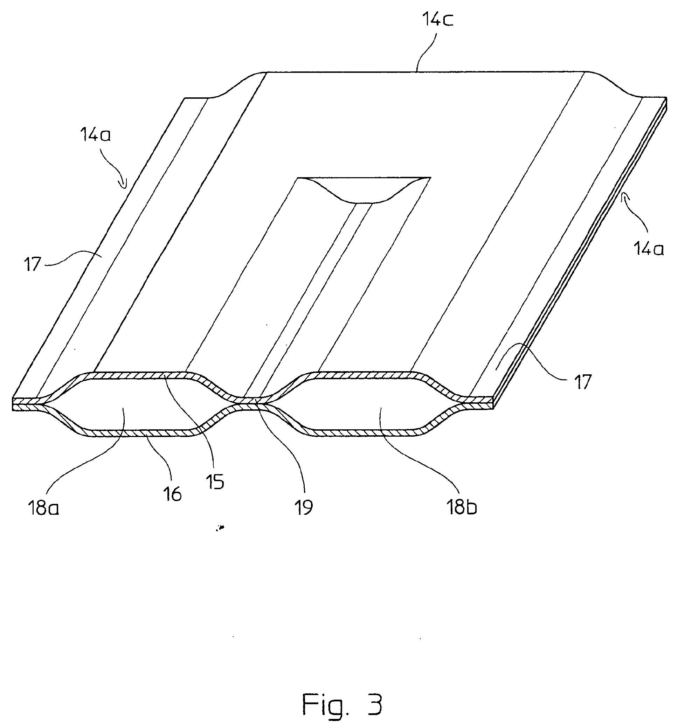

Still more in particular (figs. 2, 3), the exchangers 14 are made of a pair of juxtaposed metallic plates 15, 16, joined together through perimetric soldering 17, and separated at a predetermined distance so that a chamber 18 is defined between them for the flowing of an operating heat exchange fluid.

In accordance with a feature of the present invention, inside each exchanger 14 is provided a partition baffle 19, extending from one of its short sides 14b and having a predetermined length that is less than that of the long sides 14a. Said partition baffle 19 extending in the same direction as the long sides 14a.

Preferably, the partition baffle 19 is obtained through the mutual soldering of the two plates 15 and 16 that form said exchanger 14, starting at half way along one of their short sides 14b and extending towards the opposite short side 14c, from which it is separated by a predetermined distance.

Due to the presence of said partition baffle 19, the chamber 18 of each exchanger 14 is subdivided into two contiguous parts 18a, 18b. The parts 18a, 18b are in communication between them only in an area near to the short side 14c, opposite to the short side 14b from which departs the partition baffle itself.

In accordance with another feature of the present invention, each of the two parts 18a, 18b of the inner chamber 18, of each exchanger, is in communication with the outside through a respective opening 20, 21, provided in said exchanger 14 at its short side 14b, from which the partition baffle 19 protrudes.

Advantageously, respective tubular fittings 20a, 21a are engaged in said openings 20, 21, already during the manufacture of the exchanger.

As will be shown more clearly in the following of the description, in each exchanger 14, the aforementioned parts 18a, 18b of the chamber 18 constitute the ascending part and the descending part, respectively, of a substantially inverted U-shaped path for a predetermined heat exchange fluid.

When arranged to obtain said heat exchange unit 13 of the present invention, in the arrangement described above (fig. 1), the exchangers 14 have vertical long sides 14a and horizontal short sides 14b, 14c which are radially extended in the shell 2. More precisely, the side 14b, with respective openings 20 and 21, constitutes the lower side of each exchanger 14, where said exchanger is supported inside the shell 2, in a per se known way that is not represented.

For each tern of exchangers 14 lined up radially, is provided a duct 22, for the feeding-distribution of an operating fluid, and a collector duct 23, for the collection and discharge of said fluid. The duct 22 is connected to the tubular fittings 20a of said exchangers 14 through ducts 2a, whereas the duct 23 is connected to its tubular fittings 21a through ducts 23a.

The feeding duct 22 passes through the shell 2, to be connected, outside of it, to a source, not shown of said operating fluid (e.g. consisting of boiling water, or melted salts and the like).

The collector tube 23, in the same way as the feeding duct 22, crosses the shell 2, to be connected to different applications outside the reactor 1.

The engagement of the ducts 22 and 23 through the shell 2 is obtained through suitable nozzles 24 and 25, respectively, provided in the shell at a height near to or coinciding with that of the lower sides 14b of the individual exchangers 14.

In any case, the exchangers can freely expand upwards, where there is no attachment between them and the shell 2.

Accordingly, the serious drawbacks of mechanical nature are completely overcome, which were caused by the differing thermal expansions of the exchangers and of the shell and occurred when in the prior art exchangers operating fluids different from the reactants gases were used.

The heat exchange unit 13, structured according to the present invention, provides also the advantage of allowing the contemporary use of operating fluids of different nature. For example, with reference to the arrangement of figure 1 and to an exothermal reaction being carried out, the exchangers 14 of two annular rows may use the reactant gases, whereas those of the third row, for example the intermediate annular row, may use boiling water. In this case, removal of heat from the reaction environment as well as thermal conditioning of the reactant gases to be reacted and steam production would be obtained.

In this case, for the exchangers 14 of the two annular rows crossed by the reactants gases as operating fluid, it is provided a collector duct 23 arranged in fluid communication with a portion of said shell 2 laying above the area housing the catalytic bed or the reaction zone.

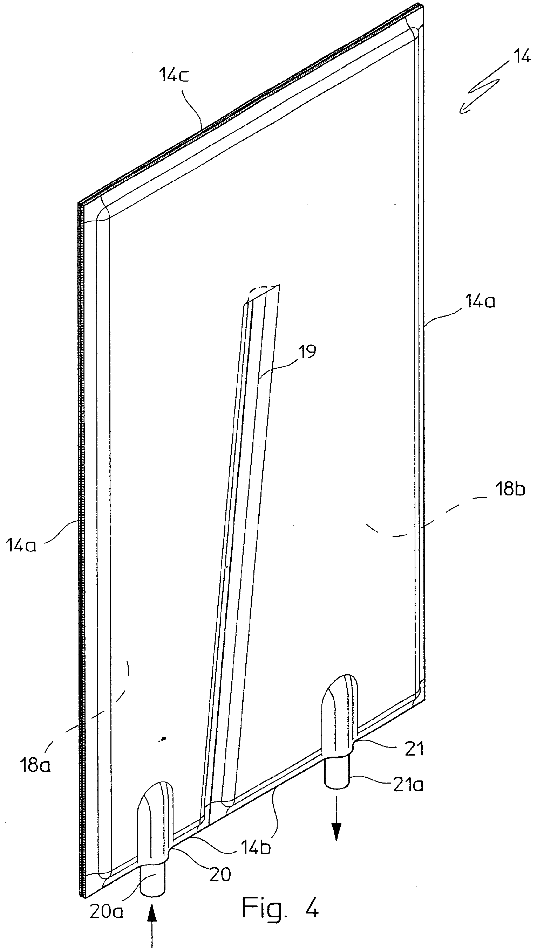

In fig. 4 an alternative embodiment of the exchanger 14 is illustrated, specifically, even if not exclusively indicated when the operating fluid to be used is water. According to this alternative, the partition baffle 19 extends, inside the chamber 18, in a direction forming an angle with said side 14b of the exchanger 14. In other words in a direction which is inclined with respect to long sides of the exchanger itself, so to define in said chamber 18 a U-shaped fluid path, having both an ascending and descending part of increasingly larger cross section.

The so conceived invention is subject to variations and changes, all falling within the scope of protection defined by the following claims.

For example, it is obviously possible to arrange the openings 20 and 21 of said heat exchanger 14 at opposite long sides 14a, at a height close or coincident with that of the short lower side 14b.

## Claims

1. Heat exchange unit for isothermal reactors, comprising a plurality of substantially box-shaped plate exchangers (14), inside which is defined a chamber (18) intended to have an operating heat exchange fluid flowing through it and equipped with tubular fittings for the inlet and outlet (20a, 21a) of said fluid in and from said chamber (18), **characterized in that** at least one of said exchangers (14) is internally equipped with a partition baffle (19), extending from one side (14b) of said exchanger (14) towards a side (14c) opposite to it and from which said partition baffle (19) is kept at a predetermined distance, said partition baffle (19) defining in said chamber a substantially U-shaped fluid path with ascending and descending parts (18a, 18b), respectively, in communication with the outside of the exchanger through said tubular fittings (20a, 21a).

2. Heat exchange unit according to claim 1, **characterized in that** said tubular fittings (2a, 21a) are engaged in respective openings (20, 21) provided in said side (14b) of the exchanger (14) from which the partition baffle extends (19).

3. Heat exchange unit according to claim 2, **characterized in that** said partition baffle (19) extends into said chamber (18) in a direction forming an angle with said side (14b), whereby the parts (18a, 18b) of said fluid path inside the exchanger (14) have an increasingly larger cross section.
